# EUROPEAN PATENT APPLICATION

(11) **EP 1 832 999 A1**
(43) Date of publication of application: **12.09.2007**
(21) Application number: 06253167.8
(22) Date of filing: 20.06.2006
(51) Int. Cl.: G06K 7/00

(54) **Tag communication device and tag communicating method**

(30) Priority: 06.03.2006 JP 2006059300
(71) Applicant: Fujitsu Ltd., Kawasaki-shi, Kanagawa 211-8588 (JP)
(72) Inventor: Tanaka, Yoshinori c/o Fujitsu Limited, Kawasaki-shi Kanagawa 211-8588 (JP)
(74) Representative: Cooper-Rolfe, Elizabeth Louise

(57) **Abstract**

A tag communication device (100), having a predetermined transmission time for a continuous transmission to a tag. The tag communication device is provided with a detecting unit (152) that detects a no-response state of the tag after data transmission to the tag using an open channel detected by carrier sense. A judging unit determines, when the detecting unit detects a no-response state and therefore, whether a timeout has occurred, by determining whether a predetermined timeout time has elapsed in the no-response state. A control unit (154) starts, when the judging unit determines that the timeout has occurred, the carrier sense after transmission to the tag has been stopped for a predetermined stop time.

## Description

This application is based upon and claims the benefit of priority from the prior Japanese Patent Application No. 2006-059300, filed on March 6, 2006, the entire contents of which are incorporated herein by reference.

The present invention relates to a tag communication device that communicates with a radio frequency identification (RFID) tag and a tag communication method.

Conventionally, identification of goods and management of physical distribution are conducted using a radio frequency identification (RFID) tag. In the RFID tag, information such as an identification code is recorded, and the RFID tag is attached to goods. An RFID reader/writer communicates such information with the RFID tag using radio waves.

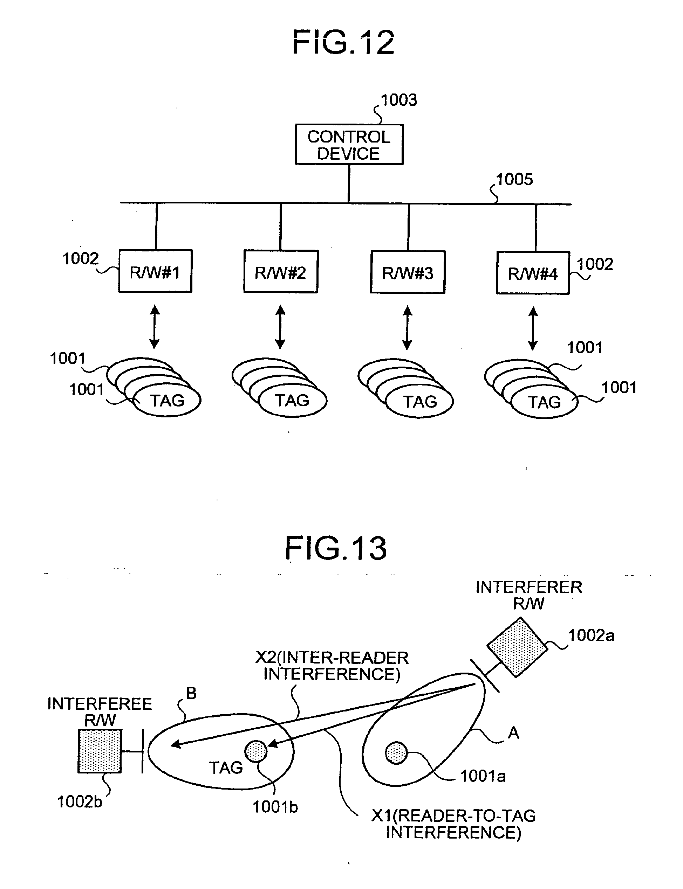

Fig. 12 is a schematic of a configuration in which plural RFID reader/writers. The RFID tag (hereinafter, "tag") 1001 adhered to goods transmits and receives information to and from the RFID reader and writer (hereinafter, "reader/writer") 1002. The reader/writer 1002 is connected to a control device 1003 via a network 1005, and inputs and outputs information, which is communicated with the tag 1001, to and from the control device 1003. In the example shown in Fig. 12, a configuration including plural reader/writers (R/W#1 to R/W#4) 1002 is shown. Each reader/writer 1002 respectively transmits and receives information to and from the tag 1001. The control device 1003 can manage the information of multiple tags 1001.

As technologies related to such reader/writers include a technology for identification information management and carrier sense operations (for example, Japanese Patent Laid-Open Publication No. 2005-229426), an identification technology in a case in which multiple tags are present in a communication region of an interrogator (reader/writer) (for example, Japanese Patent Laid-Open Publication No. 2000-131423), and a technology for preventing mutual interference of radio waves between interrogators (for example, Japanese Patent Laid-Open Publication No. 2004-266550).

Fig. 13 is a schematic for illustrating interference when plural RFID reader/writers are disposed. The communication area of the reader/writer 1002 (1002a and 1002b) is, for example, 3 meters (m) to 4 m. Therefore, as shown in Fig. 13, when plural reader/writers 1002a and 1002b are disposed, the reader/writers are disposed to be separated by a distance equal to or greater than the respective communication areas A and B. Regardless of the communication areas, interference can occur within a range of several kilometers.

A tag 1001a is positioned within the communication area A of the reader/writer 1002a. A tag 1001b is positioned within the communication area B of the reader/writer 1002b. The tag 1001b is focused. The reader/writer 1002a is an interferer that causes interference and the reader/writer 1002b is an interferee that receives interference.

If the reader/writers 1002a and 1002b disposed in close proximity perform transmission at the same time, the tag 1001b receives signals from both the reader/writers 1002a and 1002b. The tag 1001b cannot receive the signal from the reader/writer 1002b normally. Such a reader-to-tag interference is referred to as "tag interference X1". In addition, there is interference between the reader/writers 1002a and 1002b. Such interference is referred to as "inter-reader interference X2". The inter-reader interference can be prevented by changing the frequency (channel) to be used for each reader/writer 1002a and 1002b.

The tag 1001b cannot select a frequency. Therefore, even if each of the reader/writers 1002a and 1002b performs carrier sense and uses different frequencies, the tag 1001b receives the signal from the reader/writer 1002a communicating at a different frequency near the reader/writer 1002b. Thus, the tag interference X1 described above occurs.

As a configuration to prevent the tag interference X1, the control device 1003 performs centralized control of the reader/writers 1002a and 1002b to allow time-division operation, so that the transmissions by the reader/writers 1002a and 1002b do not temporally overlap (for example, Japanese Patent Laid-Open Publication No. H6-290323). However, this technique requires control and settings based on an influence of mutual interference between the reader/writers 1002a and 1002b. Therefore, complicated settings are required every time setting environments of the reader/writers 1002a and 1002b change.

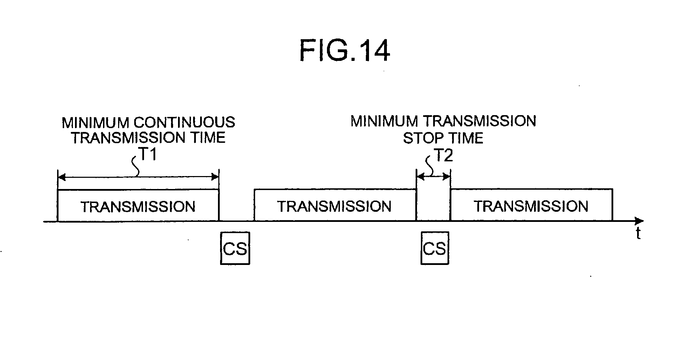

Maximum continuous transmission time from the reader/writer to the tag has recently been regulated (for example, ETS1, EN302 208-1 V1.1.1, September, 2004, p26 to p28). Fig. 14 is a schematic for illustrating explaining the respective durations of the transmission duty and carrier sense (CS). As shown in Fig. 14, the maximum continuous transmission time (T1; for example, 4 seconds) and minimum transmission stop time (T2; for example, 100 milliseconds (ms)) are set as a new regulation. As a result, the reader/writer 1002b awaiting transmission can gain an opportunity to acquire a channel during the minimum transmission stop time T2 of the reader/writer 1002a in use. Thus, the reader/writers 1002a and 1002b can start transmission equally, and at the same time, the inter-reader interference X2 can be prevented.

The prevention of the inter-reader interference X2 by effective use of the new regulation shown in Fig. 14, as well as a reduction in the tag interference X1, and the acquisition of these effects through a simple configuration are desired.

### SUMMARY OF THE INVENTION

Embodiments of the present invention seek to alleviate the above problems arising in the previously proposed technologies.

According to one aspect of the present invention there is provided a tag communication device having a maximum continuous predetermined transmission time for a continuous transmission to a tag, the tag communication device comprising a detecting unit operable to detect a no-response state of the tag after data transmission to the tag using an open channel detected by carrier sense; a judging unit operable, following the detection of a non-response state, to determine whether a timeout has occurred by determining whether a predetermined timeout time has elapsed in the no-response state; and a control unit operable, following determination that a timeout has occurred, to start a carrier sense procedure for a predetermined stop time after transmission to the tag is stopped.

A tag communication device according to another aspect of the present invention for which maximum continuous transmission time for one transmission to a tag is determined includes a control unit to which a transmission stop signal is cyclically input, and configured to start carrier sense after transmission that has been being performed is stopped at least for minimum transmission stop time, in synchronism with input of the transmission stop signal.

A tag communication method according to still another aspect of the present invention is for a tag communication for which maximum continuous transmission time for one transmission to a tag is determined. The tag communication method includes detecting a no-response state of the tag after data transmission to the tag using an open channel detected by carrier sense; judging, when the no-response state is detected at the detecting, whether a timeout has occurred by determining whether a predetermined timeout time has elapsed in the no-response state; and starting, when it is judged that the timeout has occurred at the judging, the carrier sense after transmission to the tag is stopped for a predetermined stop time.

A tag communication method according to still another aspect of the present invention is for a tag communication for which maximum continuous transmission time for one transmission to a tag is determined. The tag communication method includes cyclically inputting a transmission stop signal; and starting carrier sense after transmission that has been being performed is stopped at least for minimum transmission stop time, in synchronism with input of the transmission stop signal.

The other objects, features, and advantages of the present invention are specifically set forth in or will become apparent from the following detailed description of the present invention when read in conjunction with the accompanying drawings.

### BRIEF DESCRIPTION OF THE DRAWINGS

Fig. 1 is a schematic of a tag communication device according to a first embodiment of the present invention;
Fig. 2 is a block diagram of a control unit of the tag communication device shown in Fig. 1;
Fig. 3 is a flowchart of a processing by the tag communication device according to the first embodiment;
Fig. 4 is a flowchart of a calculation process for a maximum stop time;
Fig. 5 is a timing chart for explaining operations of the tag communication device according to the first embodiment;
Fig. 6 is a timing chart for explaining operations of the tag communication device according to the first embodiment;
Fig. 7 is a flowchart of a processing by a tag communication device according to a second embodiment of the present invention;
Fig. 8 is a timing chart for explaining operations of the tag communication device according to the second embodiment;
Fig. 9 is a timing chart for explaining operations of a tag communication device according to a third embodiment of the present invention;
Fig. 10 is a flowchart of a calculation process for a maximum number of transmission-stops;
Fig. 11 is a timing chart for explaining operations of the tag communication device according to the third embodiment;
Fig. 12 is a schematic of a configuration in which plural RFID reader/writers are provided;
Fig. 13 is a schematic for illustrating interference when plural RFID reader/writers are disposed; and
Fig. 14 is a schematic for illustrating durations of transmission duty and carrier sense.

### DETAILED DESCRIPTION OF THE PREFERRED EMBODIMENTS

Exemplary embodiments according to the present invention will be explained in detail below with reference to the accompanying drawings.

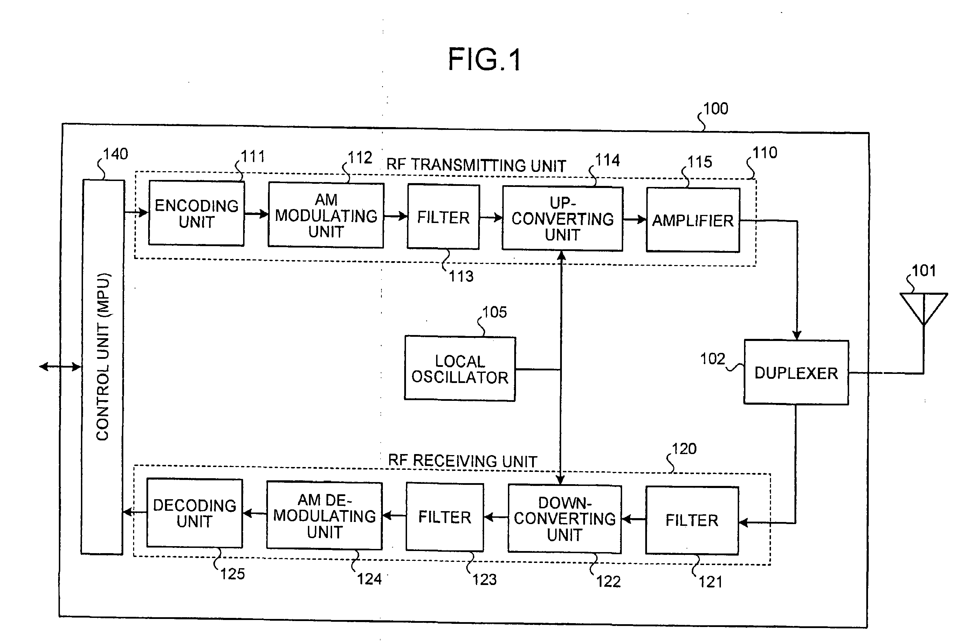

Fig. 1 is a schematic of a tag communication device according to a first embodiment of the present invention. A tag communication device 100 is equivalent to one RFID reader/writer 1002 (see Fig. 12), described above. In the tag communication device 100, an RF transmitting unit 110 and an RF receiving unit 120 are respectively connected to an antenna 101 via a duplexer 102. Transmission and reception between the RF transmitting unit 110 and the RF receiving unit 120 and the RFID tag (see Fig. 12) is controlled by a control unit (microprocessor unit (MPU)) 140.

The RF transmitting unit 110 includes an encoding unit 111 that encodes a transmission signal, an amplitude modulating unit 112 that performs AM modulation on the encoded signal, a filter 113 that filters AM modulated waves, an up-converting unit 114 that converts the frequency of the transmission signal to a wireless frequency bandwidth using an oscillation signal of a local oscillator 105, and an amplifier 115 that performs power amplification on the transmission signal and outputs the amplified signal.

The RF receiving unit 120 includes a filter 121 that filters a reception signal, a down-converting unit 122 that converts the frequency of the reception signal to a frequency bandwidth for signal processing using the oscillation signal of the local oscillator 105, a filter 123 that filters the down-converted reception signal, an AM demodulating unit 124 that performs AM demodulation on the reception signal, and a decoding unit 125 that decodes and outputs the demodulated reception signal.

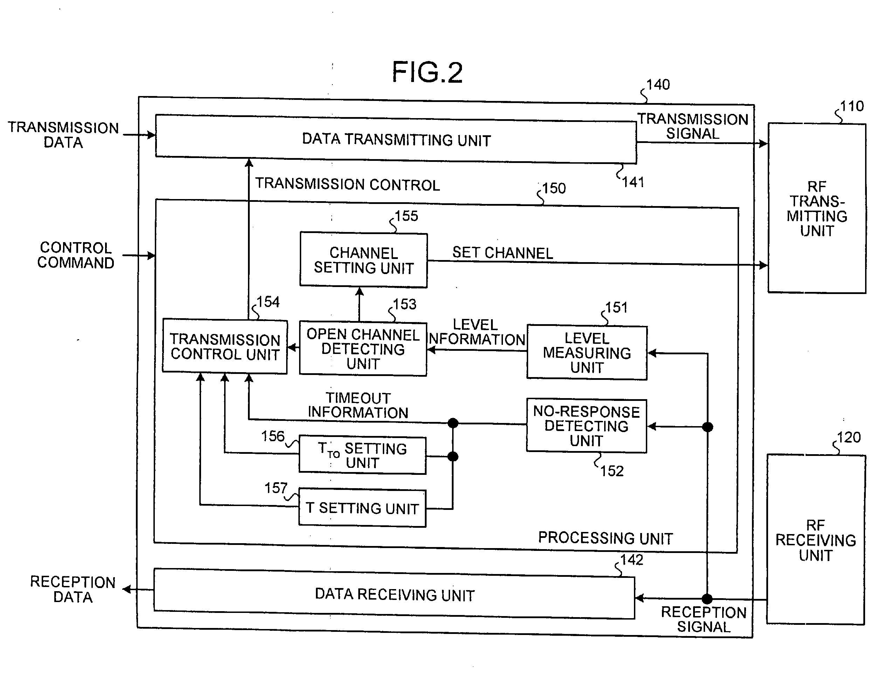

Fig. 2 is a block diagram of the control unit 140. The control unit 140 includes a data transmitting unit 141, a data receiving unit 142, and a processing unit 150. The data transmitting unit 141 outputs input transmission data to the RF transmitting unit 110 (see Fig. 1) as the transmission signal. The transmitting timing of the transmission signal from the data transmitting unit 141 is controlled by the processing unit 150. The data receiving unit 142 outputs the reception signal, output from the RF receiving unit 120 (see Fig. 1), as reception data.

The processing unit 150 includes a level measuring unit 151, a no-response detecting unit 152, an open channel detecting unit 153, a transmission control unit 154, a channel setting unit 155, a timeout time (T_{TO}) setting unit 156, and a timeout transmission stop time (T_{BKO}) setting unit 157, to set a transmission stop time.

The level measuring unit 151 measures the reception power of the reception signal output from the RF transmitting (receiving) unit 120 and outputs channel level information to the open channel detecting unit 153. The open channel detecting unit 153 detects an open channel based on the level information and outputs into on the open channel to the transmission control unit 154 and the channel setting unit 155. Information on the open channel output from the open channel detecting unit 153, timeout information output from the no-response detecting unit 152, the timeout time (T_{TO}) of the timeout time (T_{TO}) setting unit 156, and the transmission stop time (T) of the transmission stop (T) time setting unit are input into the transmission control unit 154. The channel setting unit 155 indicates the configured channel to which the transmission signal is transmitted to the RF transmitting unit 110, based on the information on the open channel.

The no-response detecting unit 152 detects the no-response time of the reception signal and outputs the detected no-response time as the timeout information. The no-response detecting unit 152 detects the degradation of the communication state with the tag. However, the degradation of the communication state can be detected not only by detection of the no-response time, but also based on transmission errors continuing for a predetermined period. The timeout information is output to the transmission control unit 154, the timeout time (T_{TO}) setting unit 156, and the transmission stop time (T) setting unit 157. The timeout time T_{TO} that is a threshold value for judging the timeout is set to be updatable in the timeout time (T_{TO}) setting unit 156. The transmission stop time T that stops transmission is set to be updatable in the transmission stop time (T) setting unit 157. The timeout time T_{TO} and the transmission stop time T can be changed based on the no-response time output from the no-response detecting unit 152 and a transmission priority level calculated by the communication states, up until the previous transmission, in the tag communication unit.

The transmission control unit 154 performs transmission control of the transmission signal (transmission timing and channel to be used) to the data transmitting unit 141, based on the input setting values and information on the open channel. The transmission control unit 154 performs control to start transmission from carrier sense after the elapse of the transmission stop time (T).

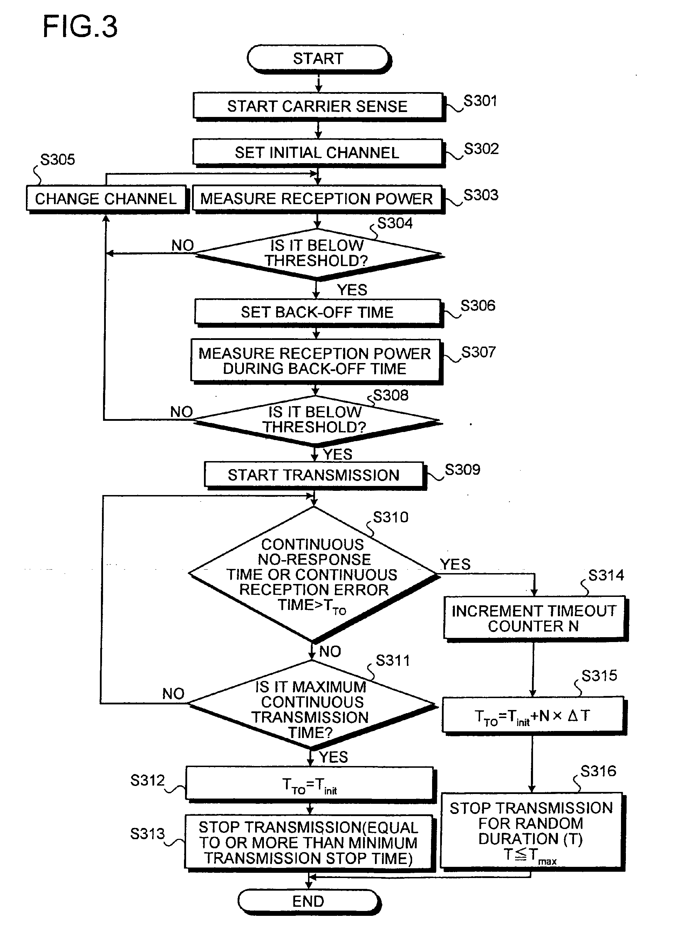

Fig. 3 is a flowchart of a processing by the tag communication device according to the first embodiment. The processing details up until the tag communication device 100 transmits a transmission signal once are shown. Hereafter, explanation is given in correspondence with the configuration shown in Fig. 2.

First, carrier sense is started (step S301), and the channel setting unit 155 performs an initial channel setting (step S302). For example, a channel 1 is set as the initial channel. Next, the reception power of the channel set at step S302 is measured by the level measuring unit 151 (step S303), and the level information is output. The open channel detecting unit 153 compares the reception power included in the level information to the predetermined threshold value (step S304). If the reception power exceeds the threshold value (step S304: NO) the channel is in use, and thus, a channel change is performed (step S305). The processes subsequent to step S303 are performed on the changed channel (for example, a channel 2). The channels are of different frequencies, respectively.

At the same time, if the reception power is below the threshold value (step S304: YES), first, a back-off time setting for starting transmission after waiting for a predetermined duration, rather than performing transmission immediately after an open channel is detected, to prevent simultaneous transmission (collision) by plural reader/writers, is performed (step S306). The back-off time is within certain time is generated as a random time period using a random number (for example, 5 ms). By the setting of the back-off time (random back-off), the reader/writers that are in a state awaiting transmission are prevented from starting transmission simultaneously, and the occurrence of inter-reader interference X2 is prevented.

Next, the level measuring unit 151 measures the power (reception power) within the back-off time (step S307). Then, the open channel detecting unit 153 compares the reception power to the predetermined threshold (step S308). If the reception power exceeds the threshold value (step S308: NO), the channel is in use during back-off time and channel change is performed (step S305). The processes subsequent to the step S303 are performed on the changed channel (for example, a channel 3).

At the same time, if the reception power is below the threshold value (step S308: YES), it is in a state in which transmission of the transmission signal is possible. Therefore, transmission control to start transmission is performed on the data transmitting unit 141 (step S309). Thus, the data transmitting unit 141 outputs the transmission data to the RF transmitting unit 110 (see Fig. 1) as the transmission signal, and the data transmission is started.

After the data transmission is started, whether tag interference is occurring is detected. If the tag interference is occurring, carrier sense is started again after transmission is stopped for a predetermined time (a random time is also possible). In this way, the tag communication device 100 has a function in which transmission is temporarily stopped autonomously if the occurrence of tag interference is detected.

Specifically, when the tag interference occurs, there is no response from the tag 1001 or a reception error occurs when a signal is transmitted to the tag 1001. Therefore, whether the continuous no-response time or the continuous reception error time exceeds the timeout time T_{TO} is judged (step S310: the continuous no-response time or the continuous reception error time>T_{TO}).

If the continuous no-response time or the continuous reception error time is below the timeout time T_{TO}, as the judgment result of step S310 (step S310: No), transmission is continued for the duration until the maximum continuous transmission time T1 (see Fig. 14). Therefore, whether the transmission time has reached the maximum continuous transmission time T1 is judged (step S311). If the transmission time has not reached the maximum continuous transmission time T1 (step S311: NO) as the result of the judgment, the process returns to step S310 and continues signal transmission. At the same time, if the transmission time has reached the maximum continuous transmission time T1 (step S311: YES), one transmission from the tag communication device 100 has been performed until the maximum continuous transmission time T1. Thus, after setting the timeout time T_{TO} to the initial value Tᵢₙᵢₜ of the smallest value (step S312), the transmission is stopped (step S313), and the processing of one transmission is completed. The duration of the transmission stop at step S313 is a duration equal to or longer than the minimum transmission stop time T2 (see Fig. 14).

In addition, when the continuous no-response time or the continuous reception error time exceeds the timeout time T_{TO} (step S310: YES), as the judgment result of step S310, the process for transmission-stop during timeout is performed. First, the timeout counter (number of timeouts) N is incremented (step S314), the timeout time T_{TO} is update-processed (step S315), the timeout transmission stop time T is set (step S316), and the processing of one transmission is completed. Thus, the next transmission starts from the carrier sense (step S301) after the elapse of the transmission stop time T set at step S316.

In the processing during timeout at step S314 to step S316, first, the number of timeouts is incremented at step S314. At step S315, the timeout time T_{TO} is increased so that timeout does not happen easily as the number of timeouts increase. Specifically, timeout time T_{TO}=initial value Tᵢₙᵢₜ+number of timeouts Nxincrement value ΔT. The transmission stop time T at step S316 is not limited to a stop of a predetermined period. In the example described in Fig. 3, the transmission stop time T is a random time within a maximum stop time determined in advance for each timeout (transmission stop time T≤maximum stop time Tₘₐₓ).

As a result, the value of the timeout time T_{TO} becomes large in the tag communication device 100 with a large number of timeouts, and thus, timeout does not happen as easily compared to the other tag communication devices 100. In addition, because the other tag communication devices 100 stop transmission by timeout, the probability of the tag communication device 100 with a large number of timeouts gaining the opportunity for transmission can be increased.

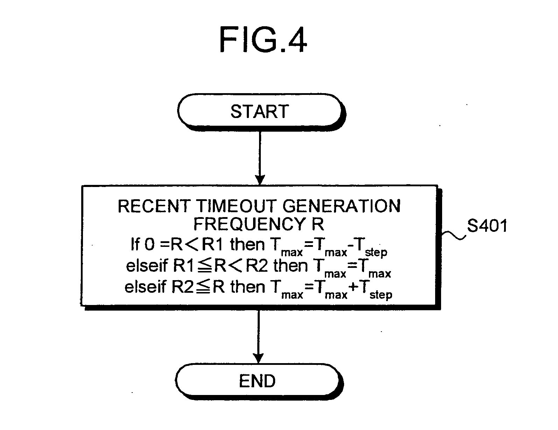

Fig. 4 is a flowchart of a calculation process for the maximum stop time during timeout. The calculation details (step S401) of the maximum stop time Tₘₐₓ at step S316 in Fig. 3 is described. When a recent timeout frequency is R and two differing thresholds set for the frequency R are R1 and R2 (R1<R2), the value of the maximum stop time Tₘₐₓ is calculated by:
If 0=R<R1 then Tₘₐₓ=Tₘₐₓ-Tₛₜₑₚ
elseif R1≤R<R2 then Tₘₐₓ=Tₘₐₓ
elseif R2≤R then Tₘₐₓ=Tₘₐₓ+Tₛₜₑₚ
Tₛₜₑₚ is a variable time of one step. The number of timeouts N can be used as the recent timeout frequency R.

According to the calculation process in Fig. 4, when the timeout frequency R is large, a large value is set as the maximum stop time Tₘₐₓ. When the timeout frequency R is small, a small value is set. As a result, a suitable maximum stop time Tₘₐₓ can be set according to the number of tags within the communication range of the tag communication device 100.

The tag communication device 100 according to the configuration above is judged to autonomously stop transmission by the occurrence of tag interference when other tag communication devices communicate simultaneously, when there is no response from the tag and the like. However, if the configuration is that in which transmission is only stopped, there is a risk that the communication is never performed. Thus, as described above, the timeout time T_{TO} and the transmission stop time T are changed to be increased according to the frequency of the timeout. As a result, when a transmission cannot be performed continuously, the value of the timeout time T_{TO} increases (timeout does not happen easily), and the probability of the next and subsequent transmissions being stopped decreases (transmission priority level is increased). At the same time, if a transmission fulfilling the maximum continuous transmission time T1 is performed even once, the timeout time T_{TO} is returned to the initial value Tᵢₙᵢₜ, which is the minimum value (timeout happens easily), and the probability of the next and subsequent transmissions being stopped increases (transmission priority level is lowered).

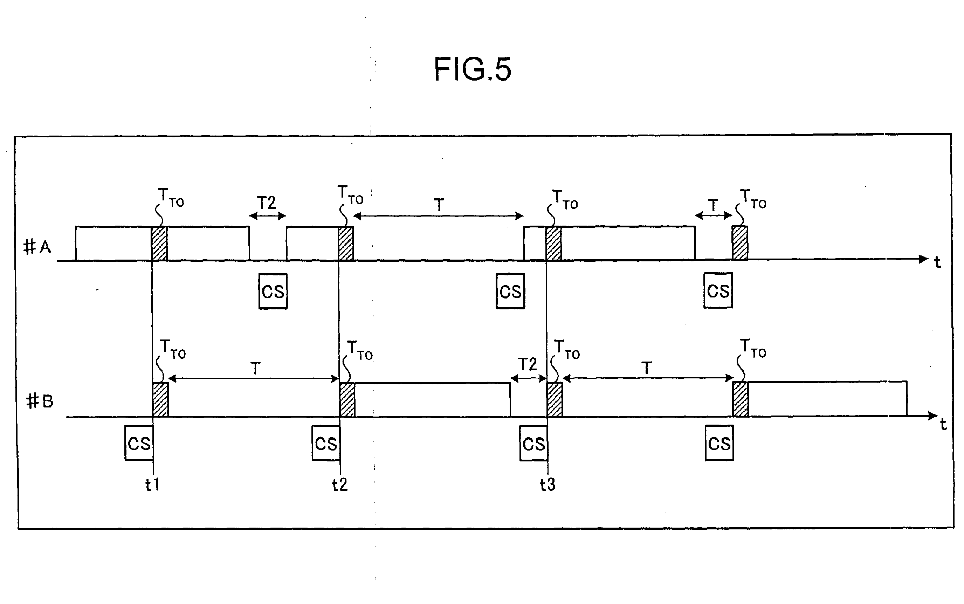

Fig. 5 is a timing chart for explaining operations of the tag communication device according to the first embodiment. Fig. 5 illustrates an operation example of when two tag communication devices #A and #B are respectively operating according to the flowchart shown in Fig. 3 and Fig. 4. The two tag communication devices #A and #B, provided near each other, perform communication with the tag using different frequencies, respectively. Furthermore, the two tag communication devices #A and #B are presumed to perform carrier sense asynchronously. T2 is the above-described minimum stop time.

The tag communication devices #A performs communication with the tag. During this time, the tag communication device #B performs carrier sense and starts transmission at time (t1) because a channel is open. However, the tag receives interference from the tag communication device #A, and there is no response to the tag communication device #B from the tag. Thus, the tag communication device #B stops transmission (transmission stop time T) after the timeout time T_{TO}. At time t1, the tag communication device #A enters a state in which communication cannot be performed temporarily, because tag interference occurs due to the start of transmission by the tag communication device #B (shaded portion in the diagram). The timeout time T_{TO} in the tag communication device #A is configured to be a larger value than the timeout time T_{TO} of the tag communication device #B. As a result, the tag communication device #B stops transmission.

The tag communication device #B performs carrier sense after the elapse of the transmission stop time T and attempts to start transmission (time t2). The tag communication device #B entered timeout at the previous time, and therefore, the value of the timeout time T_{TO} is larger than that of the previous time. At the same time, the tag communication device #A has performed a transmission once, and therefore, the timeout time T_{TO} is smaller than at least the timeout time T_{TO} of the tag communication device #B. As a result, the tag communication device #A enters timeout first and the tag communication device #B starts transmission. At the same time, the tag communication device #A stops transmission for the transmission stop time T.

Subsequently, at time t3, the tag communication device #B has performed communication at the previous time, and therefore, the value of the timeout time T_{TO} is smaller than the value of the timeout time T_{TO} of the tag communication device #A. As a result, the tag communication device #A can start communication at time t3.

According to the configuration explained above, the tag communication devices gradually increase the value of the timeout time T_{TO}, respectively, as the number of no-responses from the tag increases, thereby making it difficult for the tag communication device to enter timeout. Furthermore, the priority level for starting transmission next is heightened. When transmission is started, the value of the timeout time T_{TO} is lowered to the initial value and the transmission priority level to the other tag communication devices is lowered. As a result, the tag communication devices can respectively and autonomously perform control, and can equally perform the opportunity for communication with the tag.

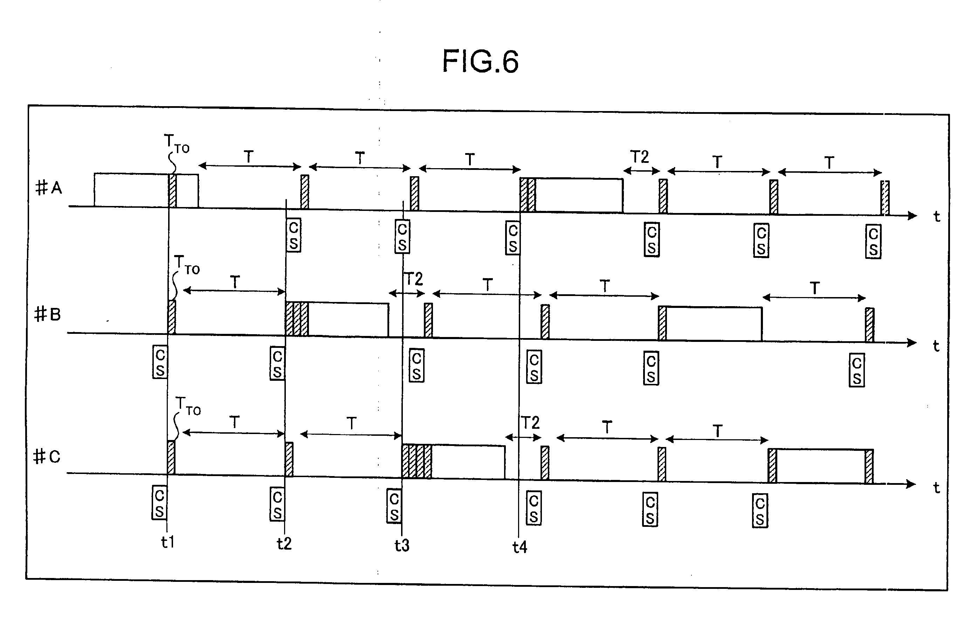

Fig. 6 is another timing chart for explaining the operations of the tag communication device according to the first embodiment. The timing chart shown in Fig. 6 differs from that shown in the fig. 5 only in the number of the tag communication devices. In the example shown in Fig. 6, there are three tag communication devices #A, #B, and #C. At time t2, the tag communication device #A is already performing communication. Therefore, the tag communication devices #B and #C are waiting. Time t2 is within the minimum transmission stop time T of the tag communication device #A. Therefore, either one of tag communication device #B or #C can start communication. At this time, if the value of the timeout time T_{TO} of the tag communication device #B is larger than that of the tag communication device #C, the tag communication device #B starts communication.

At time t3, the value of the timeout time T_{TO} of the tag communication device #C, that has not yet started communication, is the largest. Therefore, the tag communication device #C starts transmission. At time t4, the value of the timeout time T_{TO} of the tag communication device #A is the largest because the tag communication device #A could not perform transmission for two transmissions (time t1 and t2). Therefore, the tag communication device #A starts transmission.

As explained above, even when two or more tag control devices are disposed near each other, the tag control devices respectively change the timeout time and autonomously control the transmission priority level. Thus, the tag communication devices can equally perform the opportunity for communication with the tag.

In a second embodiment of the present invention, the control device 1003, shown in Fig. 12, cyclically outputs a transmission stop signal to each tag communication device 1002, via a wired or wireless network 1005. Each tag communication device 1002 is configured to stop transmission simultaneously when the transmission stop signal is received. In addition, the transmission stop signal can be output (reported) to each tag communication device 1002 by a wireless signal (beacon signal), using a wireless channel (for example, a beacon channel). The wireless channel is separate from the communication channel used between the control device 1003 and each tag communication device 1002.

In the basic configuration of the second embodiment, the internal configuration of the control unit slightly differs from that in the tag communication device 100 of the first embodiment (see Fig. 1 and Fig. 2). The transmission control unit 154 performs a transmission control to stop transmission to the data transmitting unit 141, when the transmission stop signal is input. In addition, the no-response detecting unit 152, the timeout time (T_{TO}) setting unit 156, and the transmission stop (T) setting unit 157 in Fig. 1 and Fig. 2 are unnecessary.

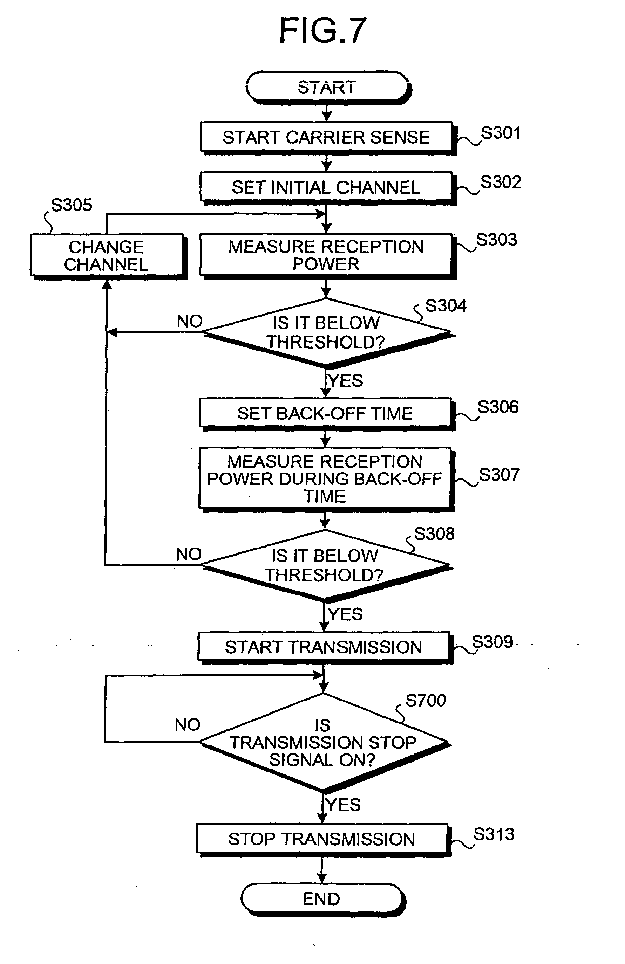

Fig. 7 is a flowchart of a processing by the tag communication device according to the second embodiment. In Fig. 7, the same reference number is given to the processes that are the same as those in the processing procedure explained in the first embodiment (see Fig. 3). Steps S301 to S309 and step S313 are the same processes as those in Fig. 3.

First, an open channel is detected by carrier sense. After transmission start is performed at step S309, whether the transmission signal is input (ON) is judged (step S700). While transmission to the tag is being performed, the transmission signal is monitored (step S700: NO). When a transmission signal from the control device 1003 is input during transmission (step S700: YES), the transmission is immediately stopped (step S313), and one transmission process is completed.

As a result, the tag communication device stops transmission synchronously with the transmission signal. Then, after the transmission has been stopped for only the minimum transmission stop time T2, the tag communication device performs carrier sense again. If transmission has not been started during the time from the reception of the previous transmission signal to the reception of the next transmission signal, carrier sense is performed immediately after the reception of the transmission signal.

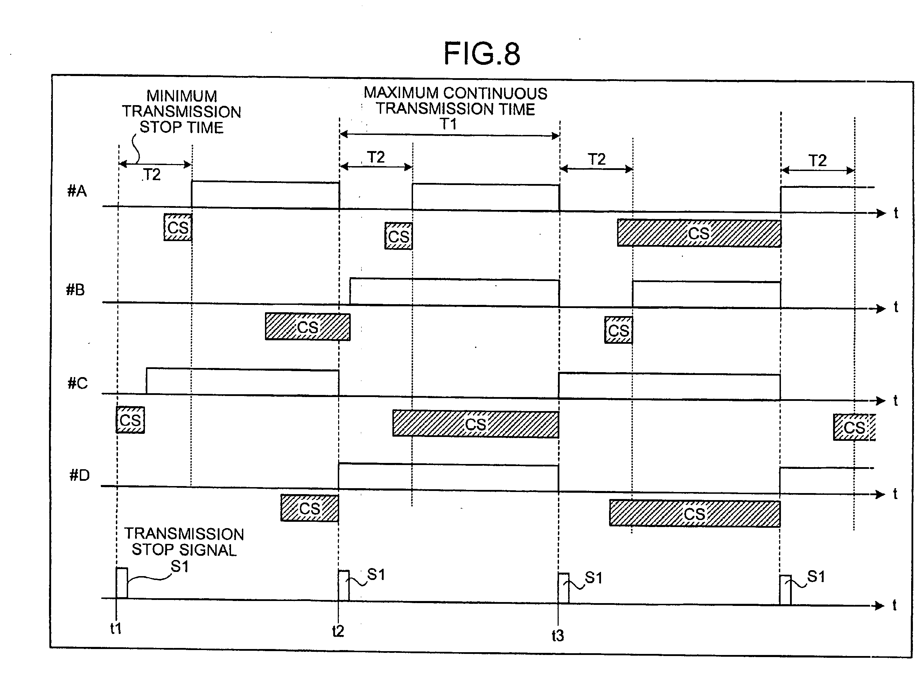

Fig. 8 is a timing chart for explaining the operations of the tag communication device according to the second embodiment. The duration of the carrier sense is indicated by the shaded area. The cycle of the transmission stop signal S1 is configured to be equal to or more than the maximum continuous transmission time T1 (S1=T1=4 seconds, in the example shown in the diagram). Four tag communication devices (#A, #B, #C, and #D) are provided near each other. The four tag communication devices #A, #B, #C, and #D respectively perform communication with the tag using different frequencies.

At time t1, all tag communication devices (#A, #B, #C, and #D) stop transmission by the transmission stop signal S1, and the channels are open. Then, the tag communication device #C with which communication is wished to be started performs carrier sense and starts communication. The tag communication device #A performs communication at the previous time. After stopping transmission for only the minimum transmission stop time T2 by the transmission stop signal S1, the tag communication device #A performs carrier sense again and starts communication from a predetermined channel.

At time t2, the tag communication devices #B and #D that have been performing carrier sense from the previous time (time t1) respectively start communication using different channels. The tag communication devices #B and #D have started carrier sense on each channel since time t1. Therefore, the tag communication devices #B and #D can immediately start transmission from the starting time (time t2) of the minimum transmission stop time T2. The minimum transmission start time T2 functions as a duration in which the tag communication device that was transmitting during the previous transmission is made to stop transmission.

The tag communication devices #A and #C that has performed transmission at the previous time can start transmission after at least the elapse of the minimum transmission stop time T2. At time T3, the tag communication devices #A, #B, and #D that has performed transmission at the previous time all stop transmission by the transmission stop signal S1. In addition, the tag communication device #C that could not transmit at the previous time starts transmission. The tag communication device #C starts carrier sense on each channel after time T2, and can immediately start transmission at time t3. The tag communication device #B that has performed transmission during the previous time performs carrier sense during the minimum transmission stop time T2, and thus, can immediately start transmission after the minimum transmission stop time T2.

As explained above, according to the second embodiment, each tag communication device stops transmission by a periodic transmission stop signal. Therefore, a state in which all tag communication devices are not performing transmission can be created. As a result, all tag communication devices can equally perform the opportunity for communication with the tag. The control device is required to output the transmission signal to the tag communication devices. However, the control device does not have to manage the communication state between the tag communication device and the tag. The control device just outputs the same transmission stop signal to each tag communication device and management burden to the control device is not generated.

A third embodiment of the present invention is configured by a combination of the process for changing the timeout time, explained in the above-described first embodiment, and the process for transmission-stop at the time the transmission stop signal is input, described in the second embodiment. The tag communication device detects an open channel by carrier sense and starts transmission. Then, when there is no response from the tag for a predetermined period or transmission errors continue for a predetermined period, the tag communication device performs the timeout processing.

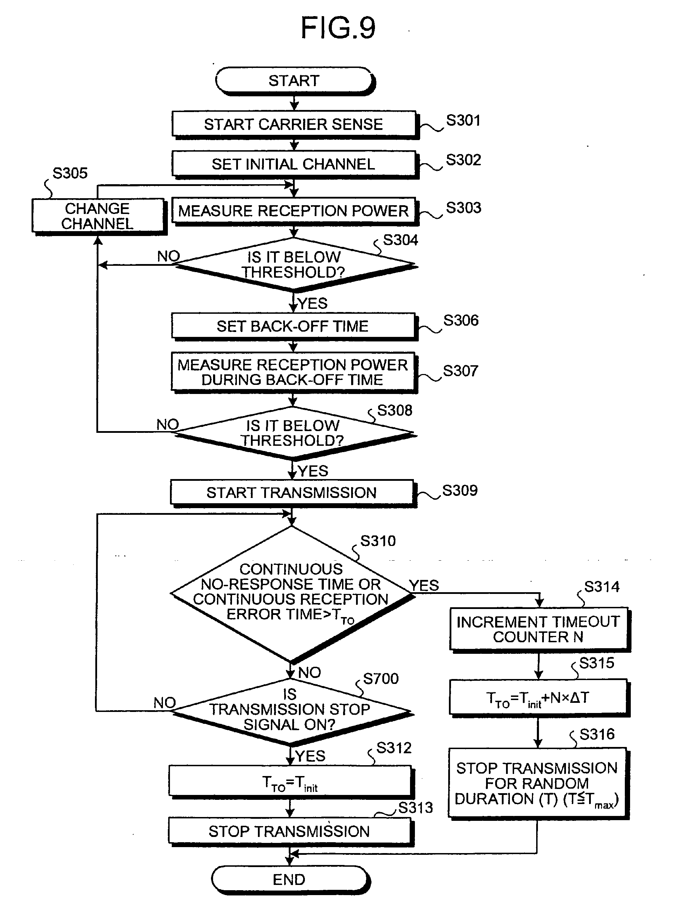

Fig. 9 is a flowchart of a processing by the tag communication device according to the third embodiment. In Fig. 9, the same reference number is given to the processes that are the same as those in the processing procedure (step S301 to step S316) explained in the first embodiment (see Fig. 3). In addition, the processing (step S700) explained in the second embodiment 2 (see Fig. 7) is performed after the step S310. At step S700, whether the transmission stop signal is input (ON) is judged. While the transmission to the tag is being performed, the process returns to step S310 to monitor the transmission stop signal. If the transmission stop signal is input from the control device 1003 during transmission (step S700: YES), the process proceeds to the processing at step S312, stops transmission at step S313, and one transmission is completed.

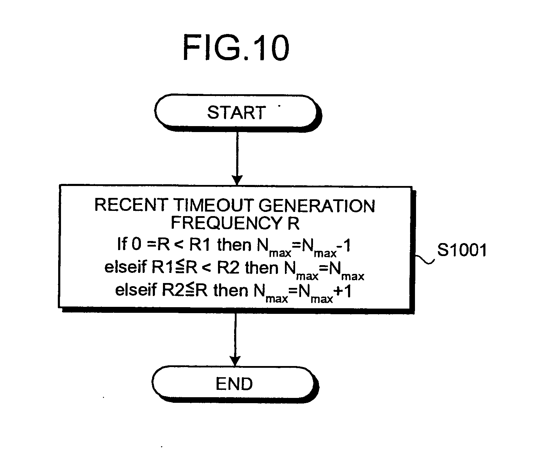

Fig. 10 is a flowchart of a calculation processing for the maximum number of transmission-stops. An example (step S1001) of another calculation content of step S316 in Fig. 9 is described. The configuration can be that in which transmission is stopped from the time of the recent timeout frequency R until the transmission signal S1 is received N times (N is a random number lower than maximum value Nₘₐₓ), based on the recent timeout frequency R, and carrier sense is performed immediately after the reception of the transmission signal S1 after N times.

The value of the maximum times Nₘₐₓ that the transmission stop signal S1 is received and transmission is stopped is calculated by:
if O=R<R1 then Nₘₐₓ=Nₘₐₓ-1
elseif R1≤R<R2 then Nₘₐₓ=Nₘₐₓ
elseif R2≤R then Nₘₐₓ=Nₘₐₓ+Tₛₜₑₚ

As shown in Fig. 10, the value of Nₘₐₓ is set to a large value when the timeout frequency R is large. If the timeout frequency is small, the value of Nₘₐₓ is set to a small value. As a result, an appropriate Nₘₐₓ value can be set according to the number of tags within the communication area. The value of the timeout time T_{TO} of the tag communication device with a large number of continuous timeouts becomes large. Therefore, the tag communication device does not enter timeout as easily as compared to other tag communication devices (to facilitate other tag communication devices to stop transmission by timeout), and the probability of gaining a transmission opportunity can be increased.

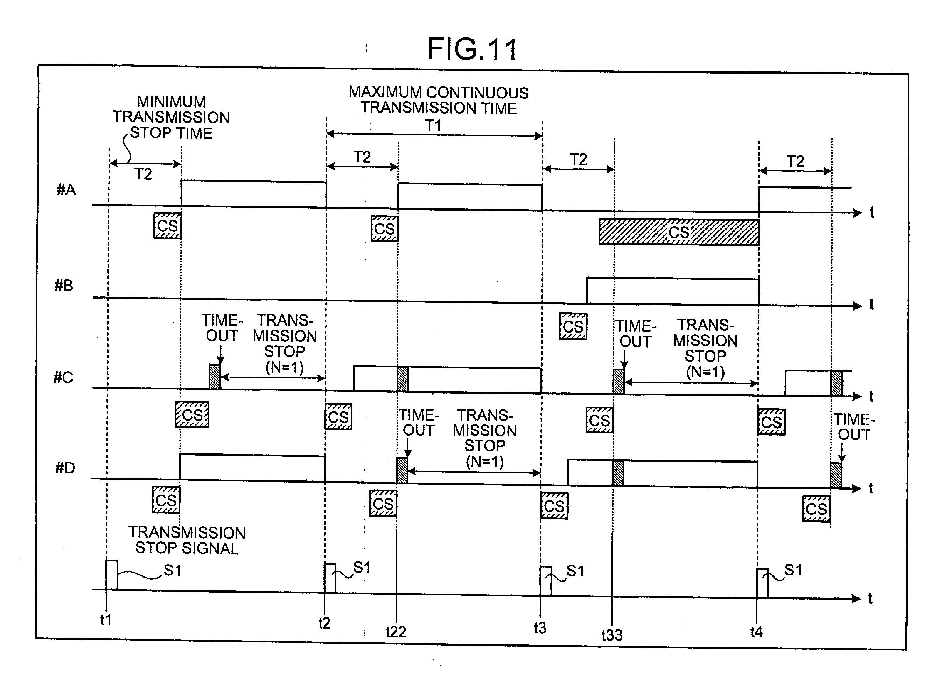

Fig. 11 is a timing chart for explaining the operations of the tag communication device according to the third embodiment. The duration of the carrier sense is indicated by the shaded area. Four tag communication devices (#A, #B, #C, and #D) are provided near each other. The four tag communication devices #A, #B, #C, and #D respectively perform communication with the tag using different frequencies.

At time t1, all tag communication devices (#A, #B, #C, and #D) stop transmission by the transmission stop signal S1, and the channels are open. Then, the tag communication devices #A, #B, and #C that want to start communication respectively perform carrier sense. In the example shown in the diagram, the tag communication devices #A and #C start communication. The tag communication device #C performs carrier sense, but enters timeout, and is in a transmission-stop state. In this case, the value of the timeout counter in the tag communication device #C is N=1 by one transmission-stop.

At time t2, the communications of the tag communication device #A and #D that had transmitted the previous time are stopped. The transmissions are stopped for at least the minimum transmission stop time T2. During the minimum transmission stop time T2, the tag communication device #C that could not transmit the previous time performs carrier sense immediately after time t2. Thus, the tag communication device #C starts communication during the minimum transmission stop time T2. The tag communication devices #A and #D perform carrier sense to perform communication again. However, the tag communication devices #A and #D are allowed to perform carrier sense at the end of the minimum transmission stop time T2, and thus, the tag communication device #C can perform communication first.

Then, the tag communication device #A can start communication again due to carrier sense. At the same time, the tag communication device #D cannot start transmission due to interference from the tag communication device #C that has already started communication and is in a timeout state. In this case, the value of the timeout counter of the tag communication device #C becomes N=1, due to one transmission-stop. The value of the timeout time T_{TO} of the tag communication device #C at time t22 is large due to the timeout at the previous time, and communication can be continued. At the same time, the tag communication device #D has a smaller value (initial value Tᵢₙᵢₜ, which is the smallest value; see Fig. 9) compared to that of the tag communication device #C, because the tag communication device #D had performed transmission at the previous time. Thus, the tag communication device #D is in a timeout state immediately after the time t22.

At time t3, the communications of the tag communication devices #A and #C that transmitted at the previous time are stopped. The transmissions are stopped for at least the minimum transmission stop time T2. During the minimum transmission stop time T2, the tag communication device #D that could not transmit the previous time performs carrier sense immediately after time t3. Thus, the tag communication device #D can start communication during the minimum transmission stop time T2. The tag communication device #C performs carrier sense and attempts to start communication. However, the value of the timeout time T_{TO} is small because the tag communication device #C had performed transmission at the previous time. Thus, the tag communication device #C enters timeout immediately after the time t33 due to interference with the tag communication device #D, and the value of the timeout counter becomes N=1.

The tag communication device #B has no transmission data to this point. When carrier sense is started during the minimum transmission stop time T2 at time t3, the tag communication device #B can start transmission during the minimum transmission stop time T2. The tag communication device #A starts carrier sense to attempt transmission-start after the minimum transmission stop time T2. However, the tag communication device #A enters a state in which carrier sense is continued (searches for another open channel) until time t4 is reached, because there is no open channel or the like.

At time t4, the tag communication device #A did not transmit at the previous time and is in a state in which the carrier sense is continued. Thus, the tag communication device #A immediately starts transmission at the start of the minimum transmission stop time T2.

According to the third embodiment, as explained in the first embodiment, the tag communication devices gradually increase the value of the timeout time T_{TO}, respectively, as the number of no-responses from the tag increases, thereby making it difficult for the tag communication device to enter timeout. Furthermore, the priority level for starting transmission next is heightened. In addition, as explained in the second embodiment, the configuration is that in which the transmissions from the tag communication devices that have been communicating up to this point are stopped by the transmission stop signal S1. As a result, the tag communication devices can respectively and autonomously perform control, and can equally perform the opportunity for communication with the tag.

The control procedure, explained using the flowchart in the embodiment explained above, can be actualized by the execution of a program prepared in advance by a computer, such as a personal computer, a work station, etc. The program is stored on a computer-readable recording medium, such as a hard disk, a flexible disk, a compact-disc read-only memory (CD-ROM), a magneto-optical (MO) disk, a digital versatile disc (DVD), etc., and is executed by being read from the recording medium by the computer. In addition, the program can be a transmission medium that can be distributed via a network, such as the Internet.

According to the embodiments described above, it is possible to reduce interference between plural reader/writers, and to make a system adoptable corresponding to a change in the number of devices or arrangement of the devices.

Although the present invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A tag communication device for which maximum continuous transmission time for one transmission to a tag is determined, the tag communication device comprising:
a detecting unit configured to detect a no-response state of the tag after data transmission to the tag using an open channel detected by carrier sense;
a judging unit configured to judge, when the detecting unit detects the no-response state, whether a timeout has occurred by determining whether a predetermined timeout time has elapsed in the no-response state; and
a control unit configured to start, when the judging unit judges that the timeout has occurred, the carrier sense after transmission to the tag is stopped for a predetermined stop time.

2. The tag communication device according to claim 1, wherein the detecting unit is configured to detect the no-response state when there is no response from the tag for a predetermined time, and to detect the no-response state when transmission errors with the tag continue for a predetermined period.

3. The tag communication device according to claim 1 or 2, wherein the judging unit is configured to set the timeout time based on the no-response state and a transmission priority level.

4. The tag communication device according to claim 3, wherein the judging unit is configured to set the timeout time and the transmission priority level, such that the timeout time is longer and the transmission priority level is higher as frequency of the timeout increases.

5. The tag communication device according to any preceding claim, wherein the control unit is configured to set a random value to the stop time, the random number being smaller than a predetermined maximum value.

6. The tag communication device according to claim 5, wherein the control unit is configured to set the maximum value according to recent frequency of the timeout.

7. A tag communication device for which maximum continuous transmission time for one transmission to a tag is determined, the tag communication device comprising a control unit to which a transmission stop signal is cyclically input, and configured to start carrier sense after transmission that has been being performed is stopped at least for minimum transmission stop time, in synchronism with input of the transmission stop signal.

8. The tag communication device according to claim 7, wherein the control unit is configured to start, when transmission has not been started at a time of last input of the transmission stop signal, carrier sense upon receiving the transmission stop signal at a present input.

9. The tag communication device according to claim 7 or 8, wherein the control unit is configured to stop transmission until a predetermined number of the transmission stop signal is input to the control unit.

10. The tag communication device according to claim 9, wherein the control unit is configured to set a random value to the predetermined number, the random number being equal to or more than one and smaller than a predetermined maximum value.

11. The tag communication device according to any one of claims 7 to 10, further comprising:
a detecting unit configured to detect a no-response state of the tag after data transmission to the tag using an open channel detected by carrier sense; and
a judging unit configured to judge, when the detecting unit detects the no-response state, whether a timeout has occurred by determining whether a predetermined timeout time has elapsed in the no-response state, wherein
the control unit is configured to set the maximum value according to recent frequency of the timeout.

12. The tag communication device according to claim 11, wherein the judging unit is configured to set the timeout time based on the no-response state and a transmission priority level.

13. The tag communication device according to claim 11 or 12, wherein the judging unit is configured to set the timeout time and the transmission priority level, such that the timeout time is longer and the transmission priority level is higher as frequency of the timeout increases.

14. The tag communication device according to any one of claims 7 to 13, wherein the transmission stop signal is output from a control device connected via a network.

15. The tag communication device according to claim 14, wherein the transmission stop signal includes a wireless signal using a wireless channel that differs from a communication channel to perform communication with the control device.

16. A tag communication method for which maximum continuous transmission time for one transmission to a tag is determined, the tag communication method comprising:
detecting a no-response state of the tag after data transmission to the tag using an open channel detected by carrier sense;
judging, when the no-response state is detected at the detecting, whether a timeout has occurred by determining whether a predetermined timeout time has elapsed in the no-response state; and
starting, when it is judged that the timeout has occurred at the judging, the carrier sense after transmission to the tag is stopped for a predetermined stop time.

17. A tag communication method for which maximum continuous transmission time for one transmission to a tag is determined, the tag communication method comprising:
cyclically inputting a transmission stop signal; and
starting carrier sense after transmission that has been being performed is stopped at least for minimum transmission stop time, in synchronism with input of the transmission stop signal.
